# EUROPEAN PATENT APPLICATION

(11) **EP 4 345 972 A1**
(43) Date of publication of application: **03.04.2024**
(21) Application number: 21946887.3
(22) Date of filing: 27.12.2021
(51) Int. Cl.: H01M 10/0562, H01M 10/0525, H01M 10/0585

(54) **MULTILAYER SOLID ELECTROLYTE FILM, ALL-SOLID-STATE BATTERY, AND PREPARATION METHOD FOR ALL-SOLID-STATE BATTERY**

(30) Priority: 23.06.2021 CN 202110699429
(71) Applicant: China Faw Co., Ltd., Changchun, Jilin 130011 (CN)
(72) Inventor: ZHAI, Ximin, Changchun, Jilin 130011 (CN); JIANG, Tao, Changchun, Jilin 130011 (CN); BIE, Xiaofei, Changchun, Jilin 130011 (CN); GAO, Tianyi, Changchun, Jilin 130011 (CN); SUN, Huanli, Changchun, Jilin 130011 (CN); RONG, Changru, Changchun, Jilin 130011 (CN)
(74) Representative: Finetti, Claudia
(86) International application number: PCT/CN2021/141671
(87) International publication number: WO 2022/267414

(57) **Abstract**

The present disclosure provides a multilayer solid electrolyte film, an all-solid-state battery, and a preparation method for the all-solid-state battery. The multilayer solid electrolyte film includes a first solid electrolyte film, a second solid electrolyte film and a third solid electrolyte film, herein the first solid electrolyte film includes a first amorphous sulfide solid electrolyte, the second solid electrolyte film includes a crystalline sulfide solid electrolyte, the third solid electrolyte film includes a second amorphous sulfide solid electrolyte, and the second solid electrolyte film is located between the first solid electrolyte film and the third solid electrolyte film.

## Description

### Cross-Reference to Related Application

The present disclosure claims priority to Chinese patent application with application number of 202110699429.4, filed to the China National Intellectual Property Administration on June 23, 2021, the disclosure of which is hereby incorporated by reference in its entirety.

### Technical Field

The present disclosure belongs to the field of lithium-ion batteries, for example, relates to a multilayer solid electrolyte film, an all-solid-state battery, and a preparation method for the all-solid-state battery.

### Background

At present, commercial lithium-ion batteries may not meet people's safety requirements for batteries due to the use of flammable and explosive organic electrolytes, and the energy density already reaches its limit. However, all-solid-state batteries that replace the organic electrolytes with solid electrolytes are expected to become the safest alternative to the lithium-ion batteries in the existing market.

According to the different types of the solid electrolytes, there are currently 3 main technical routes for the all-solid-state batteries: a polymer all-solid-state battery, an oxide all-solid-state battery, and a sulfide all-solid-state battery. Polymer electrolytes have good film-forming properties and flexibility, and processing techniques are mature. However, its applications are limited due to low ion conductivity, limited electrochemical windows, and poor thermal stability; the ion conductivity of oxide electrolytes is higher than that of the polymer electrolytes and has good stability, but its interface contact is poor, the synthesis temperature is high, and the processing difficulty is large, thus it is difficult to mass produce; and sulfide electrolytes have the highest ion conductivity, some of which already exceed the level of electrolytes, and its synthesis temperature is low, and the mechanical ductility is good, it is the most promising for commercialization at present. The thicknesses of sulfide solid electrolyte films affect the internal resistance and energy density of all-solid-state lithium batteries (ASSLB), but thinning of the film may inevitably reduce its mechanical strength and increase the risk of film breakup and Li dendrite infiltration; at the same time, interface problems (chemical instability, and mechanical instability) between the solid electrolyte film and positive and negative electrodes also affect the cycling of the all-solid-state batteries.

CN111933999A discloses a solid-state battery, a battery module, a battery pack, and a related apparatus thereof, including a sulfide electrolyte layer and at least one polymer electrolyte layer arranged on the surface of the sulfide electrolyte layer. Solid-state electrolytes satisfy the following conditions: the thickness of the sulfide electrolyte layer is greater than or equal to the thickness of the polymer electrolyte layer on the single side greater than or equal to 84.2-80.2×w (w is the density of the sulfide electrolyte layer), herein the solid-state battery uses the sulfide electrolyte layer and the polymer electrolyte layer to match, so that the ion conductivity is relatively low.

CN112018458A discloses a sulfide-polymer composite solid electrolyte and a preparation method and application thereof. It uses a water-stable sulfide solid electrolyte material and a water-soluble polymer matrix to composite, a green and pollution-free aqueous composite sulfide solid electrolyte-polymer slurry material is prepared, and a composite solid electrolyte film is further prepared. It may fully combine the advantages of high ion conductivity of the sulfide solid electrolytes and good flexibility of the polymer solid electrolytes, but the contact interface between the solid electrolyte film prepared and a motor is unstable, which affects the cycling stability of the all-solid-state battery.

The above schemes have the problem of low ion conductivity or poor cycling stability. Therefore, it is very necessary to develop a solid electrolyte film with high ion conductivity and good cycling stability.

### Summary

The present disclosure provides a multilayer solid electrolyte film, an all-solid-state battery, and a preparation method for the all-solid-state battery. The multilayer electrolyte film may prevent short circuits caused by uneven electrode surfaces of single-layer electrolytes, and may be formed in the form of electrode support without the need for additional working procedures. Compared with single-layer electrolyte films with the same thickness, the short-circuit resistance of the multilayer electrolyte film is significantly improved.

The present disclosure adopts the following technical schemes.

In a first aspect, the present disclosure provides a multilayer solid electrolyte film, and the multilayer solid electrolyte film includes a first solid electrolyte film, a second solid electrolyte film and a third solid electrolyte film, herein the first solid electrolyte film includes a first amorphous sulfide solid electrolyte, the second solid electrolyte film includes a crystalline sulfide solid electrolyte, the third solid electrolyte film includes a second amorphous sulfide solid electrolyte, and the second solid electrolyte film is located between the first solid electrolyte film and the third solid electrolyte film.

In a second aspect, the present disclosure provides an all-solid-state battery, and the all-solid-state battery contains the multilayer solid electrolyte film as described in the first aspect.

In a third aspect, the present disclosure provides a preparation method for the all-solid-state battery as described in the second aspect, including:
a first amorphous sulfide solid electrolyte and a binding agent are mixed, and applied on the surface of a positive electrode plate to form a first solid electrolyte film;
a second solid electrolyte film is prepared by a crystalline sulfide solid electrolyte and the binding agent;
a second amorphous sulfide solid electrolyte and the binding agent are mixed, and applied on the surface of a negative electrode plate to form a third solid electrolyte film; and
the positive electrode plate containing the first solid electrolyte film, the second solid electrolyte film, and the negative electrode plate containing the third solid electrolyte film are sequentially stacked together, so that the first solid electrolyte film and the third solid electrolyte film face the second solid electrolyte film respectively, and after hot pressing treatment, the all-solid-state battery is prepared.

### Brief Description of the Drawings

Fig. 1 is a structure schematic diagram of a multilayer solid electrolyte film described in Embodiment 1 of the present disclosure.
Fig. 2 is a structure schematic diagram of an all-solid-state battery described in Embodiment 1 of the present disclosure.

1-First solid electrolyte film, 2-Second solid electrolyte film, 3-Third solid electrolyte film, 4-Positive electrode, 5-Multilayer solid electrolyte film, and 6-Negative electrode.

### Detailed Description of the Embodiments

### Embodiment 1

This embodiment provides an all-solid-state battery, and the all-solid-state battery is prepared by the following method.
(1) 0.63Li₂S·0.36SiS₂·0.01Li₃PO₄ is mixed with polytetrafluoroethylene (PTFE) according to a mass ratio of 99:1, and a mixture obtained is applied on the surface of a positive electrode plate (the active substance is NCM811), to obtain the positive electrode plate coated with a first solid electrolyte film with a thickness of 5 µm;
(2) Li₆PS₅Cl and PTFE are mixed according to the mass ratio of 99:1, and a second solid electrolyte film with a thickness of 10 µm is prepared in a film former; and
(3) Li₇P₂S₈I and PTFE are mixed according to the mass ratio of 99:1, a mixture obtained is applied on the surface of a metal lithium plate, to obtain a negative electrode plate coated with a third solid electrolyte film with a thickness of 5 µm, the positive electrode plate containing the first solid electrolyte film, the second solid electrolyte film, and the negative electrode plate containing the third solid electrolyte film are sequentially stacked together, so that both the first solid electrolyte film and the third solid electrolyte film face the second solid electrolyte film, and after hot pressing at 100°C and 300 Mpa, the all-solid-state battery containing the multilayer solid electrolyte film is obtained.

Herein, the multilayer solid electrolyte film includes the first solid electrolyte film, the second solid electrolyte film and the third solid electrolyte film, herein the first solid electrolyte film includes a first amorphous sulfide solid electrolyte and a binding agent, the second solid electrolyte film includes a crystalline sulfide solid electrolyte and the binding agent, the third solid electrolyte film includes a second amorphous sulfide solid electrolyte and the binding agent, and the second solid electrolyte film is located between the first solid electrolyte film and the third solid electrolyte film.

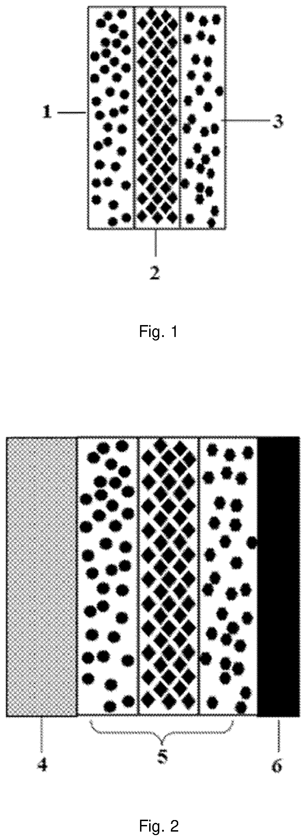

A structure schematic diagram of the multilayer solid electrolyte film is shown in Fig. 1.

A structure schematic diagram of the all-solid-state battery is shown in Fig. 2.

### Embodiment 2

This embodiment provides an all-solid-state battery, and the all-solid-state battery is prepared by the following method.
(1) 0.8Li₂S·0.19P₂S₅·0.01P₂O₅ is mixed with poly vinylidene fluoride (PVDF) according to a mass ratio of 99:1, and a mixture obtained is applied on the surface of a positive electrode plate (the active substance is NCM811), to obtain the positive electrode plate coated with a first solid electrolyte film with a thickness of 10 µm;
(2) Li₆PS₅Br and PVDF are mixed according to a mass ratio of 98:2, and a mixture obtained is applied on the first solid electrolyte film obtained in Step (1), to obtain a second solid electrolyte film with a thickness of 10 µm; and
(3) Li₇P₂S₈Brl and PVDF are mixed according to the mass ratio of 99:1, a mixture obtained is applied on the surface of a metal lithium plate, to obtain a negative electrode plate coated with a third solid electrolyte film with a thickness of 10 µm, one side, coated with the electrolyte film, of the negative electrode plate coated with the third solid electrolyte film is laminated on the second solid electrolyte film obtained in Step (2), and after hot pressing at 150°C and 400 Mpa, the all-solid-state battery containing the multilayer solid electrolyte film is obtained.

Herein, the multilayer solid electrolyte film includes the first solid electrolyte film, the second solid electrolyte film and the third solid electrolyte film, herein the first solid electrolyte film includes a first amorphous sulfide solid electrolyte and a binding agent, the second solid electrolyte film includes a crystalline sulfide solid electrolyte and the binding agent, the third solid electrolyte film includes a second amorphous sulfide solid electrolyte and the binding agent, and the second solid electrolyte film is located between the first solid electrolyte film and the third solid electrolyte film.

### Embodiment 3

This embodiment provides an all-solid-state battery, and the all-solid-state battery is prepared by the following method.
(1) 0.57Li₂S·0.38SiS₂·0.5Li₃BO₃ is mixed with Butadiene Rubber e (BR) according to a mass ratio of 97:3, and a mixture obtained is applied on the surface of a positive electrode plate (the active substance is NCM811), to obtain the positive electrode plate coated with a first solid electrolyte film with a thickness of 5 µm;
(2) Li₆PS₅Cl and BR are mixed according to a mass ratio of 96:4, and a mixture obtained is applied on the first solid electrolyte film obtained in Step (1), to obtain a second solid electrolyte film with a thickness of 10 µm; and
(3) Li₃PS₄ and BR are mixed according to the mass ratio of 97:3, a mixture obtained is applied on the surface of a metal lithium plate, to obtain a negative electrode plate coated with a third solid electrolyte film with a thickness of 5 µm, one side, coated with the electrolyte film, of the negative electrode plate coated with the third solid electrolyte film is laminated on the second solid electrolyte film obtained in Step (2), and after hot pressing at 150°C and 400 Mpa, the all-solid-state battery containing the multilayer solid electrolyte film is obtained.

Herein, the multilayer solid electrolyte film includes the first solid electrolyte film, the second solid electrolyte film and the third solid electrolyte film, herein the first solid electrolyte film includes a first amorphous sulfide solid electrolyte and a binding agent, the second solid electrolyte film includes a crystalline sulfide solid electrolyte and the binding agent, the third solid electrolyte film includes a second amorphous sulfide solid electrolyte and the binding agent, and the second solid electrolyte film is located between the first solid electrolyte film and the third solid electrolyte film.

### Embodiment 4

This embodiment provides an all-solid-state battery, and the all-solid-state battery is prepared by the following method:
(1) 0.75Li₂S·0.24P₂S₅·0.01P₂O₅ is mixed with PTFE according to a mass ratio of 99.5:0.5, and a mixture obtained is applied on the surface of a positive electrode plate (the active substance is NCM811), to obtain the positive electrode plate coated with a first solid electrolyte film with a thickness of 10 µm;
(2) Li₁₀GeP₂S₁₂ and PTFE are mixed according to the mass ratio of 99.5:0.5, and a mixture obtained is applied on the first solid electrolyte film obtained in Step (1), to obtain a second solid electrolyte film with a thickness of 15 µm; and
(3) Li₇P₃S₁₁ and PTFE are mixed according to the mass ratio of 99.5:0.5, a mixture obtained is applied on the surface of a metal lithium plate, to obtain a negative electrode plate coated with a third solid electrolyte film with a thickness of 10 µm, one side, coated with the electrolyte film, of the negative electrode plate coated with the third solid electrolyte film is laminated on the second solid electrolyte film obtained in Step (2), and after hot pressing at 100°C and 300 Mpa, the all-solid-state battery containing the multilayer solid electrolyte film is obtained.

Herein, the multilayer solid electrolyte film includes the first solid electrolyte film, the second solid electrolyte film and the third solid electrolyte film, herein the first solid electrolyte film includes a first amorphous sulfide solid electrolyte and a binding agent, the second solid electrolyte film includes a crystalline sulfide solid electrolyte and the binding agent, the third solid electrolyte film includes a second amorphous sulfide solid electrolyte and the binding agent, and the second solid electrolyte film is located between the first solid electrolyte film and the third solid electrolyte film.

### Contrast example 1

The mixture obtained in Step (2) of Embodiment 1 is applied on the surface of a positive electrode plate (the active substance is NCM811) in this contrast example, the positive electrode plate coated with a first solid electrolyte film with a thickness of 20 µm is directly pressed onto a metal lithium plate, and other conditions and parameters are completely the same as in Embodiment 1.

### Contrast example 2

The difference between this contrast example and Embodiment 1 is only that a second solid electrolyte film is not arranged, and other conditions and parameters are completely the same as in Embodiment 1.

### Contrast example 3

The difference between this contrast example and Embodiment 1 is only that a first solid electrolyte film is not arranged, and other conditions and parameters are completely the same as in Embodiment 1.

### Contrast example 4

The difference between this contrast example and Embodiment 1 is only that a third solid electrolyte film is not arranged, and other conditions and parameters are completely the same as in Embodiment 1.

### Performance test:

The ion conductivities of multilayer solid electrolytes in batteries obtained in Embodiments 1-4 and Contrast examples 1-4 are tested, the batteries obtained in Embodiments 1-4 and Contrast examples 1-4 are charged and discharged for 20 times at a rate of 0.1C, and the capacities after test cycling are tested. Testing results are shown in Table 1.

**Table 1**

| | Ion conductivity (mS/cm) | Capacity after cycling (mAh/g) |
|---|---|---|
| Embodiment 1 | 4.0 | 170 |
| Embodiment 2 | 4.3 | 172 |
| Embodiment 3 | 3.8 | 165 |
| Embodiment 4 | 7.0 | 176 |
| Contrast example 1 | 1.0 | 60 |
| Contrast example 2 | 0.5 | 130 |
| Contrast example 3 | 4.1 | 83 |
| Contrast example 4 | 4.2 | 68 |

From Table 1, it may be seen from Embodiments 1-4 that the ion conductivity of the multilayer solid electrolyte prepared in the present disclosure may reach more than 3.8 mS/cm, and the capacity of the all-solid-state electrolyte prepared may reach more than 165 mAh/g after 20 times of charging and discharging at the rate of 0.1C.

From the comparison between Embodiment 1 and Contrast example 1, it may be seen that the present disclosure adopts three layers of the electrolyte films in combination, the mechanical strength of the solid electrolyte film is guaranteed, the cycling stability is increased, and the ion conductivity may be effectively improved.

From the comparison between Embodiment 1 and Contrast example 2, it may be seen that the use of the crystalline sulfide solid electrolyte may improve the overall strength and ion conductivity of the electrolyte layer.

From the comparison between Embodiment 1 and Contrast examples 3-4, it may be seen that the present disclosure uses a high-voltage resistant material in contact with a positive electrode electrolyte film (first solid electrolyte film), and uses a material with good stability for a negative electrode in contact with a negative electrode electrolyte film (third solid electrolyte film), which may improve the structural stability of the all-solid-state electrolyte prepared and improve the cycling performance of the battery.

A multilayer solid electrolyte film provided in an embodiment of the present disclosure, herein a first amorphous sulfide solid electrolyte includes at least one of a glass phase sulfide solid electrolyte and a glass-ceramic phase sulfide solid electrolyte.

For example, the molecular formula of the first amorphous sulfide solid electrolyte is [(100-x)Li₂SxP₂S₅]_{y}M, 0<x<50, 0≤y≤20, and M is at least one of P₂S₅, GeS₂, SiS₂, B₂S₃, Li₄SiO₄, Li₃PO₄, P₂O₅, Lil, LiCI, or LiBr.

For example, the molecular formula of the first amorphous sulfide solid electrolyte is at least one of Li₄SiO₄, Li₃PO₄, or P₂O₅.

For example, the first amorphous sulfide solid electrolyte includes at least one of 70Li₂S30P₂S₅, 75Li₂S25P₂S₅, 80Li₂S20P₂S₅, 0.8Li₂S·0.19P₂S₅·0.01P₂O₅, 0.75Li₂S·0.24P₂S₅·0.01P₂O₅, Li₂S·P₂S₅·LiCl, Li₂S·P₂S₅·LiBr, or Li₂S·P₂S₅·Lil.

For example, the first amorphous sulfide solid electrolyte is 0.75Li₂S·0.24P₂S₅·0.01P₂O₅.

For example, the crystalline sulfide solid electrolyte includes a Thio-LISICON type electrolyte, an LGPS type electrolyte, or an argyrodite type electrolyte.

For example, the crystalline sulfide solid electrolyte is the argyrodite type electrolyte.

For example, the crystalline sulfide solid electrolyte includes at least one of Li₆PS₅Cl, Li₆PS₅Br, Li₆PS₅I, or Li₁₀GeP₂S₁₂.

For example, the second amorphous sulfide solid electrolyte includes at least one of the glass phase sulfide solid electrolyte and the glass-ceramic phase sulfide solid electrolyte.

For example, the molecular formula of the second amorphous sulfide solid electrolyte is [(100-x)Li₂SxP₂S₅]_{y}M, 0<x<50, 0≤y≤20, and M is at least one of P₂S₅, GeS₂, SiS₂, B₂S₃, Li₄SiO₄, Li₃PO₄, P₂O₅, Lil, LiCI, or LiBr.

For example, the molecular formula of the second amorphous sulfide solid electrolyte is at least one of Lil, LiCI, or LiBr.

For example, the second amorphous sulfide solid electrolyte includes at least one of 70Li₂S30P₂S₅, 75Li₂S25P₂S₅, 80Li₂S20P₂S₅, 0.8Li₂S·0.19P₂S₅·0.01P₂O₅, 0.75Li₂S·0.24P₂S₅·0.01P₂O₅, Li₂S·P₂S₅·LiCl, Li₂S·P₂S₅·LiBr, or Li₂S·P₂S₅·Lil.

For example, the second amorphous sulfide solid electrolyte is Li₇P₂S₈I.

For example, the thickness of the first solid electrolyte film is 1 ~20 µm. The thickness of the first solid electrolyte film is 2-10 µm, it may be 1 µm, 2 µm, 8 µm, 10 µm, 15 µm, and 20 µm.

For example, the thickness of the second solid electrolyte film is 1~50 µm. The thickness of the second solid electrolyte film is 5~20 µm, it may be 1 µm, 2 µm, 5 µm, 15 µm, 20 µm, 30 µm, and 50 µm.

For example, the thickness of the third solid electrolyte film is 1~20 µm. The thickness of the second solid electrolyte film is 2~10 µm, it may be 1 µm, 2 µm, 8 µm, 10 µm, 15 µm, and 20 µm.

For example, the first solid electrolyte film, the second solid electrolyte film, and the third solid electrolyte film independently contain a binding agent.

For example, the binding agent includes at least one of PTFE, PVDF, Nitrile Butadiene Rubber (NBR), Butadiene Rubber e (BR), Poly Vinyl Butyral (PVB) and the like. The binding agent is PTFE.

For example, the mass ratio of the first amorphous sulfide solid electrolyte and the binding agent in the first solid electrolyte film is 95:5-100:0, and it may be 95:5, 96:4, 97:3, 99.5:0.5, and 100:0.

For example, the mass ratio of the crystalline sulfide solid electrolyte and the binding agent in the second solid electrolyte film is 90:10~100:0, and it may be 90:10, 96:4, 97:3, 99.5:0.5, and 100:0.

For example, the mass ratio of the second amorphous sulfide solid electrolyte and the binding agent in the third solid electrolyte film is 95:5-100:0, and it may be 95:5, 96:4, 97:3, 99.5:0.5, and 100:0.

An all-solid-state battery provided in an embodiment of the present disclosure includes the multilayer solid electrolyte film provided by the aforementioned embodiments.

A preparation method for an all-solid-state battery provided in an embodiment of the present disclosure is used to prepare the all-solid-state battery as described in the embodiments of the present disclosure, including:
a first amorphous sulfide solid electrolyte is applied on the surface of a positive electrode plate to form a first solid electrolyte film;
a second solid electrolyte film is prepared by a crystalline sulfide solid electrolyte;
a second amorphous sulfide solid electrolyte is applied on the surface of a negative electrode plate to form a third solid electrolyte film; and
the positive electrode plate containing the first solid electrolyte film, the second solid electrolyte film, and the negative electrode plate containing the third solid electrolyte film are sequentially stacked together, so that the first solid electrolyte film and the third solid electrolyte film face the second solid electrolyte film respectively, and after hot pressing treatment, the all-solid-state battery is prepared.

For example, the method of applying the first amorphous sulfide solid electrolyte on the surface of the positive electrode plate to form the first solid electrolyte film includes at least one of coating, spraying, casting, printing, sputtering, or laminating; and the method of applying the second amorphous sulfide solid electrolyte on the surface of the negative electrode plate to form the third solid electrolyte film includes at least one of coating, spraying, casting, printing, sputtering, or laminating.

For example, the method of applying the first amorphous sulfide solid electrolyte on the surface of the positive electrode plate to form the first solid electrolyte film is the coating; and the method of applying the second amorphous sulfide solid electrolyte on the surface of the negative electrode plate to form the third solid electrolyte film is the coating.

For example, the temperature of hot pressing is 20~200°C, and it may be 20°C, 100°C, 180°C, and 200°C. For example, the temperature of hot pressing is 50∼150 °C, and it may be 50°C, 110°C, and 150°C.

For example, the pressure of hot pressing is 50~500 Mpa, and it may be 50 Mpa, 100 Mpa, 300 Mpa, 400 Mpa, and 500 Mpa.

In the electrolyte film in contact with the electrode in the present disclosure, the amorphous sulfide solid electrolyte is used, the physical compatibility between the electrode and the electrolyte film may be improved, the film breakup caused by expansion mechanical stress is avoided, and it is easy to compact without rebound. The material used for the electrolyte film in contact with the negative electrode has the good stability with the negative electrode; and the material used for the electrolyte film in contact with the positive electrode is high-voltage resistant, while the intermediate electrolyte film uses the crystalline sulfide solid electrolyte, thus the overall strength and ion conductivity of the electrolyte layer may be improved.

The multilayer electrolyte film in the present disclosure prevents short circuits caused by uneven electrode surfaces of single-layer electrolytes, and may be formed in the form of electrode support without the need for additional working procedures. Compared with single-layer electrolyte films with the same thickness, the short-circuit resistance of the three-layer electrolyte film is significantly improved, and the overall strength of the electrolyte film may be improved.

## Claims

1. A multilayer solid electrolyte film, comprising: a first solid electrolyte film, a second solid electrolyte film and a third solid electrolyte film, wherein the first solid electrolyte film comprises a first amorphous sulfide solid electrolyte, the second solid electrolyte film comprises a crystalline sulfide solid electrolyte, the third solid electrolyte film comprises a second amorphous sulfide solid electrolyte, and the second solid electrolyte film is located between the first solid electrolyte film and the third solid electrolyte film.

2. The multilayer solid electrolyte film according to claim 1, wherein the first amorphous sulfide solid electrolyte comprises at least one of a glass phase sulfide solid electrolyte and a glass-ceramic phase sulfide solid electrolyte.

3. The multilayer solid electrolyte film according to claim 2, wherein the molecular formula of the first amorphous sulfide solid electrolyte is [(100-x)Li₂SxP₂S₅]_{y}M, 0<x<50, 0≤y≤20, and M is at least one of P₂S₅, GeS₂, SiS₂, B₂S₃, Li₄SiO₄, Li₃PO₄, P₂O₅, Lil, LiCI, or LiBr.

4. The multilayer solid electrolyte film according to claim 3, wherein the molecular formula of the first amorphous sulfide solid electrolyte is at least one of Li₄SiO₄, Li₃PO₄, or P₂O₅.

5. The multilayer solid electrolyte film according to claim 2, wherein the first amorphous sulfide solid electrolyte comprises at least one of 70Li₂S30P₂S₅, 75Li₂S25P₂S₅, 80Li₂S20P₂S₅, 0.8Li₂S·0.19P₂S₅·0.01P₂O₅, 0.75Li₂S·0.24P₂S₅·0.01P₂O₅, Li₂S·P₂S₅·LiCl, Li₂S·P₂S₅·LiBr, or Li₂S·P₂S₅·Lil.

6. The multilayer solid electrolyte film according to claim 5, wherein the first amorphous sulfide solid electrolyte is 0.75Li₂S·0.24P₂S₅·0.01P₂O₅.

7. The multilayer solid electrolyte film according to any one of claims 1-6, wherein the crystalline sulfide solid electrolyte comprises a Thio-LISICON type electrolyte, an LGPS type electrolyte, or an argyrodite type electrolyte.

8. The multilayer solid electrolyte film according to claim 7, wherein the crystalline sulfide solid electrolyte is the argyrodite type electrolyte.

9. The multilayer solid electrolyte film according to claim 7, wherein the crystalline sulfide solid electrolyte comprises at least one of Li₆PS₅Cl, Li₆PS₅Br, LiₑPS₅I, or Li₁₀GeP₂S₁₂.

10. The multilayer solid electrolyte film according to any one of claims 1-9, wherein the second amorphous sulfide solid electrolyte comprises at least one of the glass phase sulfide solid electrolyte and the glass-ceramic phase sulfide solid electrolyte.

11. The multilayer solid electrolyte film according to claim 10, wherein the molecular formula of the second amorphous sulfide solid electrolyte is [(100-x)Li₂SxP₂S₅]_{y}M, 0<x<50, 0≤y≤20, and M is at least one of P₂S₅, GeS₂, SiS₂, B₂S₃, Li₄SiO₄, Li₃PO₄, P₂O₅, Lil, LiCI, or LiBr.

12. The multilayer solid electrolyte film according to claim 11, wherein the molecular formula of the second amorphous sulfide solid electrolyte is at least one of Lil, LiCI, or LiBr.

13. The multilayer solid electrolyte film according to claim 10, wherein the second amorphous sulfide solid electrolyte comprises at least one of 70Li₂S30P₂S₅, 75Li₂S25P₂S₅, 80Li₂S20P₂S₅, 0.8Li₂S·0.19P₂S₅·0.01P₂O₅, 0.75Li₂S·0.24P₂S₅·0.01P₂O₅, Li₂S·P₂S₅·LiCl, Li₂S·P₂S₅·LiBr, or Li₂S·P₂S₅·Lil.

14. The multilayer solid electrolyte film according to claim 13, wherein the second amorphous sulfide solid electrolyte is Li₇P₂S₈I.

15. The multilayer solid electrolyte film according to any one of claims 1-14, wherein the thickness of the first solid electrolyte film is 1~20 µm.

16. The multilayer solid electrolyte film according to claim 15, wherein the thickness of the first solid electrolyte film is 2∼10 µm.

17. The multilayer solid electrolyte film according to claim 15, wherein the thickness of the second solid electrolyte film is 1~50 µm.

18. The multilayer solid electrolyte film according to claim 17, wherein the thickness of the second solid electrolyte film is 5∼20 µm.

19. The multilayer solid electrolyte film according to claim 15, wherein the thickness of the third solid electrolyte film is 1~20 µm.

20. The multilayer solid electrolyte film according to claim 19, wherein the thickness of the second solid electrolyte film is 2∼10 µm.

21. The multilayer solid electrolyte film according to any one of claims 1-20, wherein the first solid electrolyte film, the second solid electrolyte film, and the third solid electrolyte film independently contain a binding agent.

22. The multilayer solid electrolyte film according to claim 21, wherein the binding agent comprises at least one of PTFE, PVDF, NBR, BR, PVB or the like.

23. The multilayer solid electrolyte film according to claim 22, wherein the binding agent is PTFE.

24. The multilayer solid electrolyte film according to claim 21, wherein the mass ratio of the first amorphous sulfide solid electrolyte and the binding agent in the first solid electrolyte film is 95:5-100:0.

25. The multilayer solid electrolyte film according to claim 21, wherein the mass ratio of the crystalline sulfide solid electrolyte and the binding agent in the second solid electrolyte film is 90:10-100:0.

26. The multilayer solid electrolyte film according to claim 21, wherein the mass ratio of the second amorphous sulfide solid electrolyte and the binding agent in the third solid electrolyte film is 95:5-100:0.

27. An all-solid-state battery, containing the multilayer solid electrolyte film according to any one of claims 1-26.

28. A preparation method for an all-solid-state battery, used to prepare the all-solid-state battery according to claim 27, comprising:
applying a first amorphous sulfide solid electrolyte on the surface of a positive electrode plate to form a first solid electrolyte film;
preparing a second solid electrolyte film by a crystalline sulfide solid electrolyte;
applying a second amorphous sulfide solid electrolyte on the surface of a negative electrode plate to form a third solid electrolyte film; and
stacking the positive electrode plate containing the first solid electrolyte film, the second solid electrolyte film, and the negative electrode plate containing the third solid electrolyte film sequentially together, so that the first solid electrolyte film and the third solid electrolyte film face the second solid electrolyte film respectively, and after hot pressing treatment, preparing the all-solid-state battery.

29. The preparation method according to claim 28, wherein the method of applying the first amorphous sulfide solid electrolyte on the surface of the positive electrode plate to form the first solid electrolyte film comprises at least one of coating, spraying, casting, printing, sputtering, or laminating; and
the method of applying the second amorphous sulfide solid electrolyte on the surface of the negative electrode plate to form the third solid electrolyte film comprises at least one of coating, spraying, casting, printing, sputtering, or laminating.

30. The preparation method according to claim 29, wherein the method of applying the first amorphous sulfide solid electrolyte on the surface of the positive electrode plate to form the first solid electrolyte film is the coating; and
the method of applying the second amorphous sulfide solid electrolyte on the surface of the negative electrode plate to form the third solid electrolyte film is the coating.

31. The preparation method according to any one of claims 28-30, wherein the temperature of hot pressing is 20~200°C.

32. The preparation method according to claim 31, wherein the temperature of hot pressing is 50~150°C.

33. The preparation method according to any one of claims 28-30, wherein the pressure of hot pressing is 50~500 Mpa.
